(19) **Europäisches Patentamt / European Patent Office / Office européen des brevets**

(11) **EP 2 310 902 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(21) Anmeldenummer: **09776892.3**

(22) Anmeldetag: **30.06.2009**

(51) Int Cl.:
***G02F 1/03*** ***(2006.01)***

(86) Internationale Anmeldenummer:
**PCT/EP2009/004723**

(87) Internationale Veröffentlichungsnummer:
**WO 2011/009467 (27.01.2011 Gazette 2011/04)**

(54) **ANSTEUERSCHALTUNG FÜR POCKELSZELLE**

ACTIVATION CIRCUIT FOR A POCKELS CELL

CIRCUIT DE COMMANDE POUR CELLULE DE POCKELS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**20.04.2011 Patentblatt 2011/16**

(73) Patentinhaber: **Bergmann Messgeräte Entwicklung KG 82418 Murnau (DE)**

(72) Erfinder: **BERGMANN, Thorald, Horst 82418 Murnau (DE)**

(74) Vertreter: **Patentanwälte Lambsdorff & Lange Dingolfinger Strasse 6 81673 München (DE)**

(56) Entgegenhaltungen:
**EP-A1- 1 418 460     EP-A1- 1 801 635 WO-A2-2008/016714**

## Beschreibung

Die Erfindung betrifft eine Ansteuerschaltung für eine Pokkelszelle nach dem Patentanspruch 1, eine Pockelszelle mit einer Ansteuerschaltung, eine Verwendung einer Pockelszelle in einem gepulsten Lasersystem und ein Verfahren zum Ansteuern einer Pockelszelle mit einer Ansteuerschaltung.

Eine Pockelszelle mit einer geeigneten schaltbaren Hochspannungsversorgung kann dazu verwendet werden, um kurze Laserpulse mit einer Dauer von wenigen Nanosekunden (ns) oder ultrakurze Laserpulse mit Pikosekunden (ps)- oder Femtosekunden (fs)- Dauer optisch zu schalten, d.h. die Intensität oder die Strahlrichtung der Laserpulse zu ändern. Laserstrahlquellen für ultrakurze Pulse haben prinzipbedingt immer sehr hohe Wiederholraten (größer als 10 Megaherz (MHz), typischerweise 70 - 200 MHz für Festkörperlaser) und niedrige Pulsenergien (typischerweise 0,1 - 50 nJ). Werden einzelne Pulse oder Pulsgruppen von ps- oder fs-Laserpulsen benötigt, so wird häufig eine Pockelszelle dafür verwendet, um diese Pulse zu selektieren. In diesem Fall muss zunächst zwischen zwei Pulsen, welche die Laserstrahlquelle typischerweise in einem zeitlichen Abstand von 6 - 15 ns aussendet, die Spannung vollständig angeschaltet werden, um nach Durchlassen eines oder mehrerer Laserpulse innerhalb 6 - 15 ns später vollständig wieder abgeschaltet zu werden.

Ebenso kann eine Pockelszelle dazu verwendet werden, bei einem kontinuierlichen Laserstrahl ein bestimmtes zeitliches Segment auszuschneiden.

Geeignete Ansteuerschaltungen für eine Pockelszelle sind beispielsweise in der deutschen Patentschrift DE 102 51 888 B4 beschrieben. Die im Wesentlichen darin beschriebenen Ansteuerschaltungen sind sogenannte Brückenschaltungen, bei welchen die Pockelszelle zwischen zwei Schaltungsknoten angeordnet ist, die Ausgangspunkt von vier Leitungen sind, die den vier Schenkeln des Buchstabens H entsprechen, weshalb diese Anordnung auch H-Konfiguration genannt wird. In der Fig. 4 dieser Druckschrift ist eine derartige Anordnung gezeigt, bei der ein erster Schaltungsknoten mit einer ersten Leitung über einen ersten Schalter mit einem positiven Hochspannungspotential und mit einer zweiten Leitung über einen zweiten Schalter mit einem Massepotential verbunden ist und ein zweiter Schaltungsknoten mit einer dritten Leitung über einen dritten Schalter mit dem positiven Hochspannungspotential und mit einer vierten Leitung über einen vierten Schalter mit dem Massepotential verbunden ist.

Die in derartigen Ansteuerschaltungen verwendeten einzelnen Schalter sind Hochspannungsschalter, mit denen Spannungen bis zu einigen Kilovolt oder einigen 10 Kilovolt geschaltet werden können. Die Schaltzeiten von gebräuchlichen Transistor-Hochspannungsschaltern liegen im Bereich weniger Nanosekunden und die Hochspannungsschalter lassen sich beispielsweise durch TTL-Signale von wenigen Volt ansteuern. In der deutschen Patentschrift DE 3 630 775 C2 ist der innere Aufbau dieser Hochspannungsschalter beschrieben. Die maximale Repetitionsrate, mit der ein derartiger Hochspannungsschalter und damit die Pockelszelle betrieben werden kann, wird unter anderem durch den maximal möglichen Verbrauch elektrischer Leistung an dem Hochspannungsschalter bestimmt.

Die Druckschrift WO 2008/016714 A2 beschreibt Vorrichtungen und Verfahren zum Erzeugen von Laserpulsen mit kurzer Pulsdauer und ausreichend hoher Energie für die photomechanische Behandlung von Hautpigmentierungen. Die Vorrichtung weist einen Resonator auf, welcher in der Lage ist, zwischen einer modengekoppelten Betriebsart und einer Verstärkungs-Betriebsart hin und her zu schalten. Diese Betriesarten werden durch Anlegen einer zeitabhängigen Vorspannung an eine elektro-optische Einrichtung wie eine Pockelszelle eingestellt, die entlang der optischen Achse des Resonators angeordnet ist. Die Druckschrift offenbart in der Fig. 4 und im Absatz [75] ein Verfahren zum Ansteuern einer Pockelszelle mit fünf Schaltern, die mit den Bezugszeichen A, B1, B2, C und D bezeichnet sind.

Es ist Aufgabe der vorliegenden Erfindung, eine Ansteuerschaltung für eine Pockelszelle anzugeben, mit welcher die maximal mögliche Repetitionsrate gesteigert werden kann.

Diese Aufgabe wird durch die Merkmale des Patentanspruchs 1 gelöst. Vorteilhafte Ausgestaltungen und Weiterbildungen sind Gegenstand von Unteransprüchen sowie nebengeordneten Ansprüchen.

Ein wesentlicher Gedanke der vorliegenden Erfindung besteht darin, die Ansteuerschaltung so zu konfigurieren, dass die insgesamt an den Hochspannungsschaltern verbrauchte elektrische Leistung besser auf diese verteilt wird. Damit kann erreicht werden, dass keiner der Schalter für sich alleine die , von der Pockelszelle benötigte gesamte Schaltspannung schalten muss. Die Schalter können somit mit einer höheren Repetitionsrate beaufschlagt werden, bis der maximal mögliche Verbrauch elektrischer Leistung an einem einzelnen Schalter erreicht ist.

Eine erfindungsgemäße Ansteuerschaltung für eine Pockelszelle umfasst die Merkmale gemäß Patentanspruch 1.

In einer Ausführungsform kann das zweite und dritte Potential denselben Wert haben, beispielsweise Massepotential.

In einer Ausführungsform wird das erste elektrische Potential durch den Pluspol einer Spannungsquelle und das vierte elektrische Potential durch den Minuspol der Spannungsquelle geliefert.

Mit derartigen Ansteuerschaltungen kann eine Spannung an die Pockelszelle angelegt werden, indem gleichzeitig der erste Schalter und der vierte Schalter geschlossen und der zweite Schalter und der dritte Schalter geöffnet werden. Die Pockelszelle kann spannungslos geschaltet werden, indem gleichzeitig der erste Schalter und der vierte Schalter geöffnet und der zweite Schalter und der dritte Schalter geschlossen werden.

Die von der Pockelszelle benötigte Schaltspannung 2-HV wird somit nicht lediglich von einem Schalter zur Pockelszelle geschaltet sondern sie wird auf zwei Schalter verteilt, die betragsmäßig je ein Potential HV an die Pokkelszelle durchschalten. Die beiden Schalter brauchen somit jeweils nicht mit der vollen Schaltspannung 2.HV der Pockelszelle belastet werden, sondern müssen jeweils ein Potential HV durchschalten. Bedingt durch diese verringerte Leistungsbelastung können die Schalter mit einer höheren Repetitionsrate beaufschlagt werden, bevor sie an die Grenze ihrer elektrischen Leistungsbelastung stoßen.

Gemäß einer Ausführungsform können das zweite und das dritte elektrische Potential einander gleich sein und insbesondere durch ein Massepotential gegeben sein. Es ist aber ebenso möglich, dass das zweite und das dritte elektrische Potential auf verschiedenen Potentialwerten liegen.

Im Folgenden werden Ausführungsbeispiele für eine erfindungsgemäße Ansteuerschaltung in den Zeichnungsfiguren näher dargestellt. Es zeigen:

Fig. 1    eine Ausführungsform einer erfindungsgemäßen Ansteuerschaltung;

Fig. 2    eine weitere Ausführungsform einer erfindungsgemäßen Ansteuerschaltung; und

Fig. 3    ein Schalterstellungs-Zeit- bzw. Spannungs-Zeitdiagramm zur Veranschaulichung der Schalterzustände bzw. des Spannungszustands der Pockelszelle entsprechend einer Ausführungsform eines Verfahrens zum Ansteuern einer Pockelszelle mit der Ansteuerschaltung der Fig. 2.

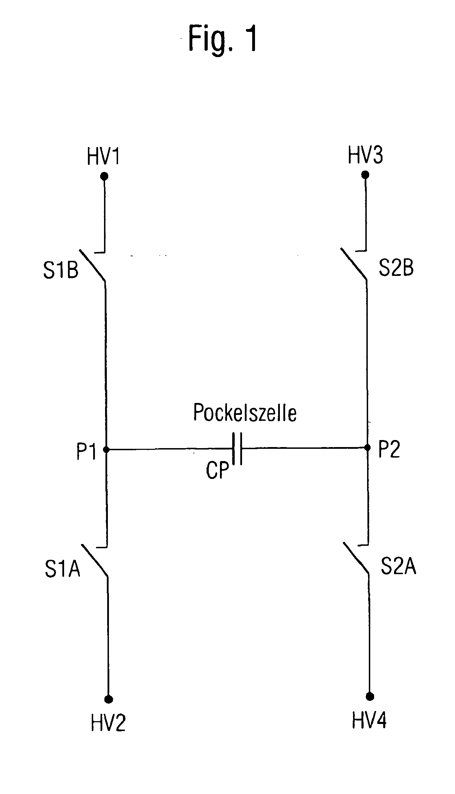

In der Fig. 1 ist eine erfindungsgemäße Ansteuerschaltung gemäß einer allgemeinen Ausführungsform schematisch dargestellt. Die Darstellung umfasst ebenso die von der Ansteuerschaltung anzusteuernde Pockelszelle CP. Die Pockelszelle CP weist zwei elektrische Anschlüsse auf, von denen einer mit einem ersten Schaltungsknoten P1 und ein zweiter mit einem zweiten Schaltungsknoten P2 verbunden oder zu verbinden ist. Der erste Schaltungsknoten P1 ist durch eine erste elektrische Leitung über einen ersten Schalter S1B mit einem ersten elektrischen Potential HV1 verbunden. Der erste Schaltungsknoten P1 ist ebenso durch eine zweite elektrische Leitung über einen zweiten Schalter S1A mit einem zweiten elektrischen Potential HV2 verbunden.

Der zweite Schaltungsknoten P2 ist durch eine dritte elektrische Leitung über einen dritten Schalter S2A mit einem dritten elektrischen Potential HV3-verbunden. Der zweite Schaltungsknoten P2 ist über einen vierten Schalter S2B mit einem vierten elektrischen Potential HV4 verbunden.

Die elektrischen Potentiale HV1 bis HV4 sind so gewählt, dass die Differenz der Potentiale HV1 - HV4 größer ist als die Differenz der Potentiale HV1 - HV2, und dass die Differenz der Potentiale HV1 - HV4 größer ist als die Differenz der Potentiale HV3 - HV4.

Die Hochspannungsschalter S1A, S1B, S2A und S2B sind Transistor-Hochspannungsschalter und sie können beispielsweise durch solche Transistor-Hochspannungsschalter gegeben sein, wie sie in der deutschen Patentschrift DE 3 630 775 C2 beschrieben worden sind.

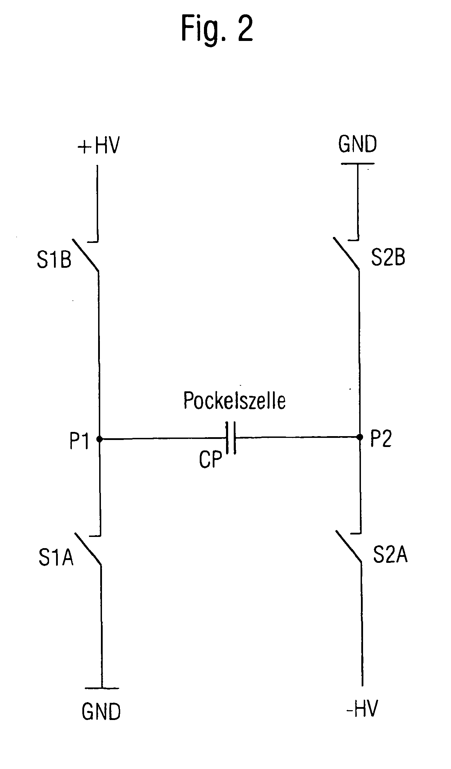

In der Fig. 2 ist eine erfindungsgemäße Ansteuerschaltung gemäß einer speziellen Ausführungsform schematisch dargestellt. Das erste elektrische Potential HV1 wird hier durch ein positives elektrisches Potential +HV des Pluspols einer Hochspannungsquelle geliefert. Das zweite elektrische Potential HV2 ist durch ein Massepotential GND der Ansteuerschaltung gegeben. Das dritte elektrische Potential HV3 ist ebenfalls durch das Massepotential GND der Ansteuerschaltung gegeben. Das vierte elektrische Potential wird schließlich durch ein negatives elektrisches Potential -HV des Minuspols der Spannungsquelle geliefert.

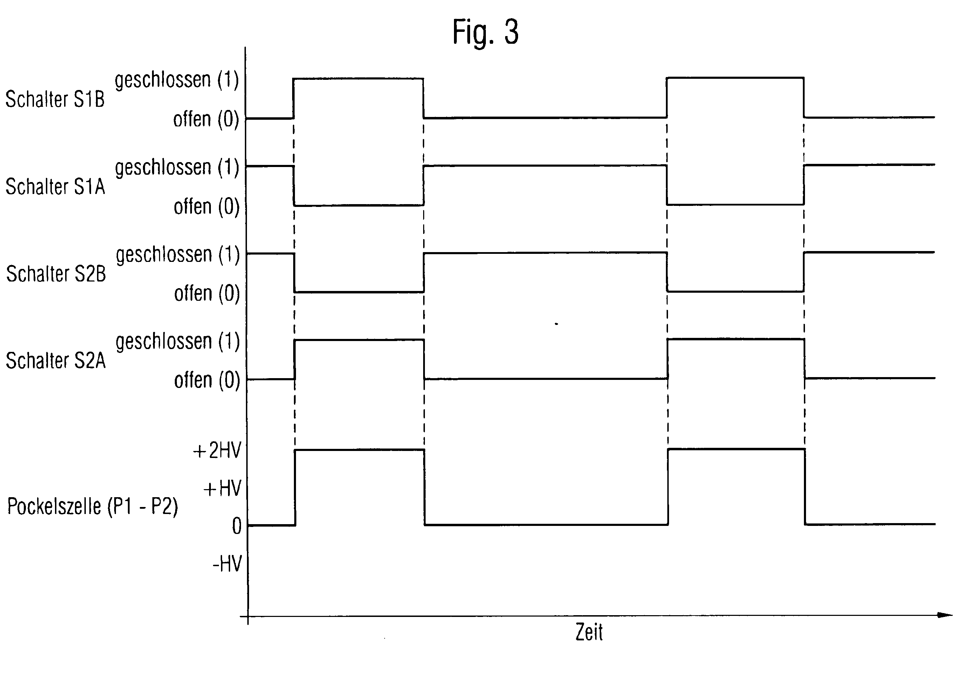

In der Fig. 3 ist ein Schaltungszustand-Zeit- bzw. Spannungs-Zeit-Diagramm zur Veranschaulichung des zeitlichen Verlaufs der Schalterzustände bzw. der Spannung an der Pockelszelle CP bei Verwendung der in der Fig.2 gezeigten Ansteuerschaltung dargestellt. Wenn an die Pockelszelle CP eine Spannung angelegt werden soll, werden gleichzeitig der erste Schalter S1B und der vierte Schalter S2A geschlossen und der zweite Schalter S1A und der dritte Schalter S2B geöffnet, sodass eine Spannung 2.HV an die Pockelszelle CP angelegt wird. Wenn nach Ablauf einer vorbestimmten Zeit die Pockelszelle CP spannungslos geschaltet werden soll, werden gleichzeitig der erste Schalter S1B und der vierte Schalter S2A geöffnet und der zweite Schalter S1A und der dritte Schalter S2B geschlossen. Die unterste Kurve des Diagramms zeigt den Spannungszustand an der Pockelszelle CP, d.h. die Differenz zwischen den elektrischen Potentialen an den Schaltungsknoten P1 und P2. Für die Zeitdauer, in der der erste Schalter S1B und der vierte Schalter S2A geschlossen und der zweite Schalter S1A und der dritte Schalter S2B geöffnet sind, liegt an der Pokkelszelle die Spannung 2.HV an.

Im Folgenden sei angenommen, dass eine Pockelszelle eine bestimmte Schaltspannung U benötigt und diese Schaltspannung U mit einer Repetitionsrate f an- und ausgeschaltet werden soll. Wenn die Schaltspannung U durch einen einzelnen Schalter an die Pockelszelle durchgeschaltet werden soll, so gilt für die an dem Schalter verbrauchte elektrische Leistung P näherungsweise:

$$P1 = k \times U^2 \times f \qquad\qquad (1)$$

mit einer Konstante k.

Dies gilt, wenn beispielsweise die vollständige Schaltspannung U durch eine einfache Push-Pull-Schaltung an die Pokkelszelle geschaltet werden soll oder auch im Falle der in der Fig. 4 der deutschen Patentschrift DE 102 51 888 B4 gezeigten Brückenschaltung für jeden der beiden darin gezeigten Schalter S1B und S2B.

Wenn dagegen die erfindungsgemäße Ansteuerschaltung gemäß Fig. 1 oder Fig.2 verwendet und gemäß Fig. 3 betrieben wird, so gilt für die an jedem der beiden Schalter S1B und S2A verbrauchte elektrische Leistung:

$$P2 = k \times (U/2)^2 \times f = P1/4, \qquad\qquad (2)$$

wobei U = 2·HV die von der Pockelszelle benötigte Schaltspannung ist.

Ein und derselbe Schalter wird somit mit der halben Schaltspannung HV betrieben. Da zwei derartige Schalter gebraucht werden, gilt:

$$2 \times P2 = P1/2, \qquad\qquad (3)$$

für die insgesamt verbrauchte elektrische Leistung. Das heißt, die zwei Schalter brauchen zusammen nur halb soviel elektrische Leistung wie ein einzelner in dem Fall, dass gemäß Gl. (1) ein einzelner Schalter zum Durchschalten der Schaltspannung verwendet wird. Außerdem wird die benötigte elektrische Leistung auf zwei Schalter verteilt.

Um eine bestimmte Schaltspannung und Repetitionsrate an einer Pockelszelle erzeugen zu können, benötigt man somit deutlich weniger elektrische Leistung als beim oben dargestellten Stand der Technik. Wenn und soweit die Repetitionsrate durch den maximal möglichen elektrischen Leistungsverbrauch an einem einzelnen Schalter begrenzt wird, kann man somit in diesem Ausmaß die Repetitionsrate erhöhen, mit der die einzelnen Schalter beaufschlagt werden.

**Patentansprüche**

1. Ansteuerschaltung für eine Pockelszelle, mit

- einer Spannungsquelle zur Bereitstellung eines ersten elektrischen Potentials (HV1), eines zweiten elektrischen Potentials (HV2), eines dritten elektrischen Potentials (HV3) und eines vierten elektrischen Potentials (HV4), und
- genau vier Schaltern (S1A, S1B, S2A, S2B), nämlich einem ersten Schalter (S1B), einem zweiten Schalter (S1A), einem dritten Schalter (S2B) und einem vierten Schalter (S2A),
- einem ersten Schaltungsknoten (P1), der mit einem ersten Anschluss der Pockelszelle (CP) verbindbar ist, und einem zweiten Schaltungsknoten (P2), der mit einem zweiten Anschluss der Pockelszelle (CP) verbindbar ist, wobei
- der erste Schaltungsknoten (P1) durch eine erste Leitung über den ersten Schalter (S1B) mit dem ersten elektrischen Potential (HV1) und durch eine zweite Leitung über den zweiten Schalter (S1A) mit dem zweiten elektrischen Potential (HV2) verbunden ist, und
- der zweite Schaltungsknoten (P2) durch eine dritte Leitung über den dritten Schalter (S2B) mit dem dritten elektrischen Potential (HV3) und über den vierten Schalter (S2A) mit dem vierten elektrischen Potential (HV4) verbunden ist, wobei
- das erste elektrische Potential (HV1) positiver als das zweite elektrische Potential (HV2) und das dritte elektrische Potential (HV3) positiver als das vierte elektrische Potential (HV4) ist, und wobei
- die Differenz zwischen dem ersten elektrischen Potential (HV1) und dem vierten elektrischen Potential (HV4) größer ist als die Differenz zwischen dem ersten elektrischen Potential (HV1) und dem zweiten elektrischen Potential (HV2), und dass
- die Differenz zwischen dem ersten elektrischen Potential (HV1) und dem vierten elektrischen Potential (HV4) größer ist als die Differenz zwischen dem dritten elektrischen Potential (HV3) und dem vierten elektrischen Potential (HV4).

2. Ansteuerschaltung nach Anspruch 1, bei welcher
das erste elektrische Potential (HV1) durch den Pluspol der Spannungsquelle bereitgestellt wird und das vierte elektrische (HV4) durch den Minuspol der Spannungsquelle bereitgestellt wird.

3. Ansteuerschaltung nach Anspruch 1 oder 2, bei welcher
das zweite (HV2) und das dritte elektrische Potential (HV3) einander gleich sind.

4. Ansteuerschaltung nach Anspruch 3, bei welcher
das zweite (HV2) und das dritte elektrische Potential (HV3) durch ein Massepotential gegeben sind.

5. Ansteuerschaltung nach Anspruch 1 oder 2, bei welcher
das zweite und das dritte elektrische Potential voneinander verschieden sind.

6. Ansteuerschaltung nach einem der Ansprüche 1 bis 5, bei welcher
einer oder mehrere der Schalter (S1A, S1B, S2A, S2B) durch Schaltpulse unabhängig ansteuerbar sind.

7. Ansteuerschaltung nach einem der Ansprüche 1 bis 6, bei welcher
ein oder mehrere der Schalter (S1A, S1B, S2A, S2B) durch Schaltpulse gleichzeitig ansteuerbar sind.

8. Pockelszelle mit einer Ansteuerschaltung nach einem der vorhergehenden Ansprüche.

9. Verwendung mindestens einer Pockelszelle nach Anspruch 8 in einem gepulsten Lasersystem.

10. Verfahren zum Ansteuern einer Pockelszelle mit einer Ansteuerschaltung nach einem der Ansprüche 1 bis 7, bei welchem eine erste Spannung an die Pockelszelle angelegt wird, indem gleichzeitig der erste Schalter (S1B) und der vierte Schalter (S2A) geschlossen und der zweite Schalter (S1A) und der dritte Schalter (S2B) geöffnet werden.

11. Verfahren nach Anspruch 10, bei welchem
eine zweite Spannung an die Pockelszelle angelegt wird, indem gleichzeitig der erste Schalter (S1B) und der vierte Schalter (S2A) geöffnet und der zweite Schalter (S1A) und der dritte Schalter (S2B) geschlossen werden.

12. Verfahren nach Anspruch 10 und 11, wobei die ersten, zweiten, dritten und vierten elektrischen Potentiale (HV1, HV2, HV3, HV4) so gewählt sind, dass eine der beiden an die Pockelszelle angelegten Spannungen den Wert Null hat.

13. Verfahren nach einem der Ansprüche 10 bis 12, bei welchem das zweite elektrische Potential und das dritte elektrische Potential Massepotentiale sind.

## Claims

1. Activation circuit for a Pockels cell, having

- a voltage source for providing a first electrical potential (HV1), a second electrical potential (HV2), a third electrical potential (HV3) and a fourth electrical potential (HV4), and
- precisely four switches (S1A, S1B, S2A, S2B), namely a first switch (S1B), a second switch (S1A), a third switch (S2B) and a fourth switch (S2A),
- a first circuit node (P1), which can be connected to a first connection of the Pockels cell (CP), and a second circuit node (P2) which can be connected to a second connection of the Pockels cell (CP),
- the first circuit node (P1) being connected to the first electrical potential (HV1) via the first switch (S1B) by means of a first line and being connected to the second electrical potential (HV2) via the second switch (S1A) by means of a second line, and
- the second circuit node (P2) being connected to the third electrical potential (HV3) via the third switch (S2B) by means of a third line and being connected to the fourth electrical potential (HV4) via the fourth switch (S2A),
- the first electrical potential (HV1) being more positive than the second electrical potential (HV2) and the third electrical potential (HV3) being more positive than the fourth electrical potential (HV4), and
- the difference between the first electrical potential (HV1) and the fourth electrical potential (HV4) being greater than the difference between the first electrical potential (HV1) and the second electrical potential (HV2), and
- the difference between the first electrical potential (HV1) and the fourth electrical potential (HV4) being greater than the difference between the third electrical potential (HV3) and the fourth electrical potential (HV4).

2. Activation circuit according to Claim 1, in which the first electrical potential (HV1) is provided by the positive pole of the voltage source and the fourth electrical potential (HV4) is provided by the negative pole of the voltage source.

3. Activation circuit according to Claim 1 or 2, in which
the second electrical potential (HV2) and the third electrical potential (HV3) are the same as one another.

4. Activation circuit according to Claim 3, in which
the second electrical potential (HV2) and the third electrical potential (HV3) are given by an earth potential.

5. Activation circuit according to Claim 1 or 2, in which
the second and third electrical potentials are different from one another.

6. Activation circuit according to one of Claims 1 to 5, in which
one or more of the switches (S1A, S1B, S2A, S2B) can be activated independently by means of switching pulses.

7. Activation circuit according to one of Claims 1 to 6, in which
one or more of the switches (S1A, S1B, S2A, S2B) can be activated at the same time by means of switching pulses.

8. Pockels cell having an activation circuit according to one of the preceding claims.

9. Use of at least one Pockels cell according to Claim 8 in a pulsed laser system.

10. Method for activating a Pockels cell having an activation circuit according to one of Claims 1 to 7, in which
a first voltage is applied to the Pockels cell by simultaneously closing the first switch (S1B) and the fourth switch (S2A) and opening the second switch (S1A) and the third switch (S2B).

11. Method according to Claim 10, in which
a second voltage is applied to the Pockels cell by simultaneously opening the first switch (S1B) and the fourth switch (S2A) and closing the second switch (S1A) and the third switch (S2B).

12. Method according to Claims 10 and 11, the first, second, third and fourth electrical potentials (HV1, HV2, HV3, HV4) being selected in such a manner that one of the two voltages applied to the Pockels cell has the value zero.

13. Method according to one of Claims 10 to 12, in which
the second electrical potential and the third electrical potential are earth potentials.

**Revendications**

1. Circuit de commande pour une cellule de Pockel, comprenant :

- une source de tension pour la mise à disposition d'un premier potentiel électrique (HV1), d'un second potentiel électrique (HV2), d'un troisième potentiel électrique (HV3) et d'un quatrième potentiel électrique (HV4), et
- exactement quatre interrupteurs (S1A, S1B, S2A, S2B), à savoir un premier interrupteur (S1B), un second interrupteur (S1A), un troisième interrupteur (S2B) et un quatrième interrupteur (S2A),
- un premier noeud de circuit (P1) qui peut être connecté à une première connexion de la cellule de Pockel (CP) et un second noeud de circuit (P2) qui peut être connecté à une seconde connexion de la cellule de Pockel (CP), dans lequel
- le premier noeud de circuit (P1) est relié par un premier conducteur au premier potentiel électrique (HV1) par l'intermédiaire du premier interrupteur (S1B) avec le premier potentiel électrique (HV1) et est relié au second interrupteur (S1A) avec le second potentiel électrique (HV2) par un second conducteur, et
- le second noeud de circuit (P2) est relié par l'intermédiaire d'un troisième conducteur au troisième interrupteur (S2B) avec le troisième potentiel électrique (HV3) et est relié au quatrième interrupteur (S2A) avec le quatrième potentiel électrique (HV4), dans lequel

- le premier potentiel électrique (HV1) est plus positif que le second potentiel électrique (HV2) et le troisième potentiel électrique (HV3) est plus positif que le quatrième potentiel électrique (HV4), et dans lequel
- la différence entre le premier potentiel électrique (HV1) et le quatrième potentiel électrique (HV4) est plus grande que la différence entre le premier potentiel électrique (HV1) et le second potentiel électrique (HV2), et en ce que
- la différence entre le premier potentiel électrique (HV1) et le quatrième potentiel électrique (HV4) est plus grande que la différence entre le troisième potentiel électrique (HV3) et le quatrième potentiel électrique (HV4).

2. Circuit de commande selon la revendication 1, dans lequel le premier potentiel électrique (HV1) est mis à disposition par le pôle positif de la source de tension et dans lequel le quatrième potentiel électrique (HV4) est mis à disposition par le pôle négatif de la source de tension.

3. Circuit de commande selon l'une ou l'autre des revendications 1 et 2, dans lequel le second potentiel électrique (HV2) et le troisième potentiel électrique (HV3) sont identiques.

4. Circuit de commande selon la revendication 3, dans lequel le second potentiel électrique (HV2) et le troisième potentiel électrique (HV3) sont donnés par un potentiel de masse.

5. Circuit de commande selon l'une ou l'autre des revendications 1 et 2, dans lequel le second et le troisième potentiel électrique sont différents l'un de l'autre.

6. Circuit de commande selon l'une des revendications 1 à 5, dans lequel un ou plusieurs des interrupteurs (S1A, S1B, S2A, S2B) peuvent. être commandés indépendamment par des impulsions de commutation.

7. Circuit de commande selon l'une des revendications 1 à 6, dans lequel un ou plusieurs des interrupteurs (S1A, S1B, S2A, S2B) peuvent être commandés simultanément par des impulsions de commutation.

8. Cellule de Pockel comprenant un circuit de commande selon l'une des revendications précédentes.

9. Utilisation d'au moins une cellule de Pockel selon la revendication 8 dans un système laser à impulsions.

10. Procédé pour commander une cellule de Pockel, comprenant un circuit de commande selon l'une des revendications 1 à 7, et dans lequel une première tension est appliquée sur la cellule de Pockel et en ce que, simultanément, le premier interrupteur (S1B) et le quatrième interrupteur (S2A) sont fermés et le second interrupteur (S1A) et le troisième interrupteur (S2B) sont ouverts.

11. Procédé selon la revendication 10, dans lequel une seconde tension est appliquée sur la cellule de Pockel et en ce que, simultanément, le premier interrupteur (S1B) et le quatrième interrupteur (S2A) sont ouverts et le second interrupteur (S1A) et le troisième interrupteur (S2B) sont ouverts.

12. Procédé selon l'une ou l'autre des revendications 10 et 11, dans lequel le premier, le second, le troisième et le quatrième potentiel électrique (HV1, HV2, HV3, HV4) sont choisis de telle sorte qu'une des deux tensions appliquées sur la cellule de Pockel a la valeur zéro.

13. Procédé selon l'une des revendications 10 à 12, dans lequel le second potentiel électrique et le troisième potentiel électrique sont des potentiels de masse.

# Fig. 1

Pockelszelle

CP

HV1  HV3
S1B  S2B
P1  P2
S1A  S2A
HV2  HV4

# Fig. 2

# Fig. 3

Schalter S1B — geschlossen (1) / offen (0)

Schalter S1A — geschlossen (1) / offen (0)

Schalter S2B — geschlossen (1) / offen (0)

Schalter S2A — geschlossen (1) / offen (0)

Pockelszelle (P1 - P2) — +2HV / +HV / 0 / -HV

Zeit

EP 2 310 902 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10251888 B4
- DE 3630775 C2
- WO 2008016714 A2